(19)

**Europäisches Patentamt**
**European Patent Office**
**Office européen des brevets**

(11) **EP 4 234 774 A1**

(12)

# EUROPEAN PATENT APPLICATION
published in accordance with Art. 153(4) EPC

(43) Date of publication:
**30.08.2023 Bulletin 2023/35**

(21) Application number: **21882152.8**

(22) Date of filing: **22.10.2021**

(51) International Patent Classification (IPC):
**D01D 5/092** (2006.01)      **D01D 10/06** (2006.01)
**D01F 6/04** (2006.01)

(52) Cooperative Patent Classification (CPC):
**D01D 5/092; D01D 10/06; D01F 6/04**

(86) International application number:
**PCT/CN2021/125724**

(87) International publication number:
**WO 2022/083740 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.10.2020 CN 202011148949**

(71) Applicants:
- **China Petroleum & Chemical Corporation
  Beijing 100728 (CN)**
- **Sinopec Nanjing Research Institute of Chemical
  Industry Co., Ltd.
  Nanjing, Jiangsu 210048 (CN)**

(72) Inventors:
- **KONG, Fanmin
  Nanjing, Jiangsu 210048 (CN)**
- **ZHAO, Yunsheng
  Nanjing, Jiangsu 210048 (CN)**
- **YU, Pinhua
  Nanjing, Jiangsu 210048 (CN)**
- **ZHANG, Ye
  Nanjing, Jiangsu 210048 (CN)**
- **XU, Li
  Nanjing, Jiangsu 210048 (CN)**
- **WU, Xiaolian
  Nanjing, Jiangsu 210048 (CN)**
- **SU, Hao
  Nanjing, Jiangsu 210048 (CN)**

(74) Representative: **karo IP
karo IP Patentanwälte
Kahlhöfer Rößler Kreuels PartG mbB
Postfach 32 01 02
40416 Düsseldorf (DE)**

(54) **FIBER SPINNING METHOD, AND SPUN FIBERS AND USE THEREOF**

(57) Spun fibers and the use thereof, and a fiber spinning method. The fiber spinning method comprises extruding and spinning a spinning solution, and then sequentially subjecting a fiber precursor obtained by spinning to cooling formation, drying and stretching, wherein the method for the cooling formation comprises bringing the fiber precursor into contact with a fluid at a temperature of no more than -10°C. Polyethylene spun fibers obtained by means of the fiber spinning method have a breaking strength of 40 CN/dtex or more and a modulus of 1400 CN/dtex or more.

FIG. 2

**Description**

CROSS REFERENCE TO RELATED APPLICARTIONS

The application claims benefit of the Chinese Application No. 202011148949.8, filed on October 23, 2020, the content of which is entirely incorporated herein by reference.

TECHNICAL FIELD

The invention relates to a fiber spinning and a spinning method for producing the spun fibers and an use thereof.

BACKGROUND ART

The ultra-high molecular weight polyethylene fiber, the aramid fiber and the carbon fiber are jointly called as three high-technology and novel materials in the 21st century, and are widely applied in the industrial fields of national defense, military protection and civil industry due to their excellent characteristics such as high strength, high modulus, high orientation degree, desirable wear resistance and ageing resistance. The improvement of high-performance polyethylene fiber technology and the wide-bound localization of raw materials in recent years have vigorously promoted the rapid development of the high-performance polyethylene fiber industry in China.

CN101148783B discloses a method for preparing ultra-high molecular weight polyethylene fiber by means of a coagulating bath, and controlling the air temperature to be within a range of 30-110°C.

CN110791821A discloses an one-step method for preparing the novel ultra-high strength high-modulus polyethylene fibers by adopting a water bath cooling at 0-80°C, and sending the fibers to a spinning hot box for recovering the solvent and carrying out a hot stretching.

Generally speaking, the above methods have produced a certain effect on the performance improvement of polyethylene fiber products, but there is still a relatively large improvement space. Moreover, some method has the problem of poor stability, which causes that the various batches of product have significantly different properties.

SUMMARY OF THE INVENTION

In order to further improve performances of the polyethylene fiber products, the inventors of the present invention have implemented a large amount of researches and discovered that a high-performance polyethylene fiber product having greatly improved breaking strength and modulus can be prepared by means of a low-temperature dry gas quenching formation, thereby accomplishing the present invention.

In a first aspect, the present invention provides a spun fiber, said spun fiber being a crystalline polymer, it is characterized in that the spun fiber has an irregularity no more than 2%, preferably 0.5-1%, and a crystallinity measured by Differential Scanning Calorimetry within a range of 60-95%, preferably 85-90%; the spun fiber has a grain size measured by X-ray Diffraction (XRD) along the normal direction of the (020) crystal plane within a range of 7.4-9.6nm, preferably 7.8-9nm; a grain size along the normal direction of the (110) crystal plane within a range of 8.8-11.5nm, preferably 8.9-10nm; and a grain size along the normal direction of the (200) crystal plane within a range of 7.3-11nm, preferably 7.8-10.5 nm.

In a second aspect, the present invention provides a fiber spinning method, comprises extruding and spinning a spinning solution, and sequentially subjecting the fiber precursors obtained by spinning to cooling formation, drying and stretching, it is characterized in that the cooling formation are carried out so that the irregularity of the fiber precursors obtained after the cooling formation is not more than 3%, preferably within a range of 1.5-2%.

The fiber spinning method provided by the invention adopts brand-new low-temperature gas quenching accelerated forming process to improve the crystal orientation degree of gel filaments and reduce the grain size, such that the breaking strength and the modulus of polyethylene fiber products are greatly improved, and the repeatability of the method is desirable, the performances of different batches of products are approximate, and the product performance difference caused by the different batches is small. In addition, the method introduces low-temperature quenching gas, does not bring in any impurity, can be used for both the dry-method production process and wet-method production process, and is particularly suitable for dry spinning technology.

According to the invention, the low-temperature gas quenching accelerated forming process is performed in combination with the drying and heating box configured with the air knife having a specific structure, and can produce the effects of effectively improving the drying efficiency of materials and further upgrading the fiber filament product. In addition, because an air output quantity and an air output direction at an air outlet of the air knife are adjustable, an use of the air knife is more flexible to adapt to various use requirements.

The method of the invention can be used for preparing the spun fiber with fine denier, even the spun fiber with a fine denier still exhibit high breaking strength and modulus, preferably, the polyethylene spinning fiber of the invention has a breaking strength higher than 40 CN/dtex, and a modulus higher than 1,800 CN/dtex, which are superior to the maximum breaking strength of 35 CN/dtex and a maximum modulus lower than 1,300 CN/dtex of the same kind of product in the prior art; in addition, the polyethylene spinning fiber of the invention has an obviously lower variable coefficient, thus the polyethylene spinning fiber is expected to be applied to meet the requirements of high modulus and high breaking-strength such as parachutes for aerospace, anchor ropes, fixed ropes for drilling platforms, bulletproof products, civil sport equipment, stab-resistant products, medical treatment materials, marine aquaculture fish boxes and fish nets.

## BRIEF DESCRIPTION OF THE DRAWINGS

FIG. 1 illustrates a process flow diagram of a specific embodiment of a fiber spinning method provided by the present invention;
FIG. 2 illustrates a schematic structural diagram of an embodiment of the air knife;
FIG. 3 shows a cross-sectional view of the inner barrel and the outer barrel of FIG. 2;
FIG. 4 is a schematic structural diagram of the movable flange of FIG. 2;
FIG. 5 is a schematic structural diagram of the fixed flange of FIG. 2;
FIG. 6 illustrates a schematic structural diagram of an embodiment of the spinning box in the present invention;
FIG. 7 illustrates a DSC curve of the spun fibers obtained in Examples 1-3 and Comparative Example 1of the present invention;
FIG. 8 illustrates a XRD pattern of the spun fibers obtained in Examples 1-3 and Comparative Example 1of the present invention.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

Unless otherwise specified in the present invention, the directional terms used herein such as "upper, lower, left and right" generally refers to the orientation as shown with reference to the appended drawings. The terms "inner and outer" refer to the inside and outside relative to the contours of the components per se.

The fiber spinning method provided by the present invention controls the modes and conditions of the cooling formation, such that the irregularity of the nascent gel filaments obtained after the cooling formation process is not more than 3%, preferably within a range of 1.5-2%. In this way, the semi-finished fiber filaments obtained after drying has an irregularity not more than 1.5%, preferably within a range of 0.5-1%, such that the stretched fiber filament product has low irregularity, high breaking strength and modulus; in addition, the method has desired repeatability, the properties of different batches of products are proximate, and the product performance difference caused by different batches is small.

Preferably, the method of cooling formation comprises blowing the fiber precursors with a fluid at a temperature not more than -10°C, preferably blowing the fiber precursors with a gas (low-temperature quenching gas) with the temperature not more than -10°C. The method introduces low-temperature quenching gas, does not bring in any impurity, can be used for both the dry-method production process and wet-method production process, and is particularly suitable for dry spinning technology.

In the present invention, the low-temperature quenching mode is to quench the fiber precursors sprayed out from the spinneret orifice by using a fluid at a temperature not more than -10°C. According to the methods in the prior art, both the dry-method and the wet-method use a gas with a temperature of more than 0°C for cooling. The inventors of the present invention have discovered through researches that although the gas temperature above 0°C is very low relative to the spun fibers (fiber precursor) sprayed from nozzles is very low, and the temperature difference is large, the mechanical property and the product stability of the fiber product can be further improved by using the fluid with a temperature below -10°C. The reasons may be that the melt is in a uniform state before entering the spinneret plate and subjecting to extrusion, and the folding chain therein has a stable structure; after extrusion of the melt, a surface of the melt is cooled and can be rapidly solidified and formed, so as to ensure that the stable folding chain structure in the fiber precursors does not change, and after further heating and stretching, the folding chain in the fiber precursors can be gradually stretched into a stable lattice structure. Therefore, when the quenching time of the fiber precursors is shortened, the internal stable structure of the fiber can be protected to the maximum extent, and the spinnability of said fiber is improved.

Theoretically, any fluid with a temperature below -10°C can be used in the present invention; however, when both energy consumption and fiber product performance are taken into consideration, the temperature of the fluid for cooling formation is within a range from -50°C to -10°C, preferably from -40°C to -10°C, more preferably from -30°C to -20°C.

The low-temperature gas is adopted to accelerate the solidification of gel filaments, the lower is the temperature, the shorter is the solidification forming time, so that the gel filaments are not interfered by the gas speed, the stable structure in the gel filaments is maintained, and the adhesion condition of the gel filaments can be effectively avoided.

The fluid may be a gas or a liquid, any inert fluid that does not react with the fiber filament product and has no adverse effect on the fiber filament product can be used for the purpose of the present invention. For example, the fluid may be one or more selected from a group consisting of liquid ammonia, liquid nitrogen, air, an aqueous glycol solution and an aqueous ethanol solution.

In the present invention, the fluid for cooling formation is preferably a gas. For the dry spinning process, an inert gas such as nitrogen gas is used, instead of using an air.

The contact is preferably performed by blowing, and the blowing is preferably performed by a circular blow centered on the ejected fiber precursors. The so-called circular blow is to blow a quenching fluid for cooling formation around the fiber precursors to sufficiently cool the fiber precursors.

According to a preferred embodiment of the present invention, the blowing time is within a range of 0.1-1 second, preferably 0.5-0.7 second, and the pressure is within a range of 0-100kPa, preferably 3-10 kPa. The blowing time refers to the time period from the start of contacting the fiber filaments with the quenching fluid to the exit of the quenching fluid. The pressure herein refers to the pressure at which the quenching fluid flows out, it is a gauge pressure.

The blowing process in the present invention is a continuously and stably performed process, the blowing effect is related to the stretching speed of the spinneret, the higher is the speed, the shorter is the blowing time on the unit filament. When the stretching ratio of the spinneret is 6-50 times, the extrusion speed of the spray nozzle is preferably within a range of 2-5 m/min, more preferably 3-3.5 m/min.

The formation mode of low-temperature and a circular blow with dry gas provided by the present invention is applicable to both the wet process and the dry process in the prior art. Preferably applicable to the dry process. The combination of the above-described quenching formation method with the dry process is further described below.

In the invention, the cooling formed fiber precursors contact with a drying gas having a velocity not lower than 20 m/s, and a surface of the fiber is heated by the hot rollers, so as to promote softening of the fiber surface and the precipitation of decahydronaphthalene in the fiber, in order to facilitate the subsequent stretching of the fiber; the decahydronaphthalene separated out on the fiber surface is subjected to an air knife in a drying and heating box to adjust the air speed and flow rate, so that the fiber surface is rapidly dried. In the drying step after cooling in the prior art, the solvent is usually removed by blowing and drying with hot air or by introducing the solvent into an extract liquor for carrying out extraction and separation, and the air speed for blowing and drying is usually lower than 10 m/s.

Preferably, the flow rate of the drying gas is 30-40 m/s.

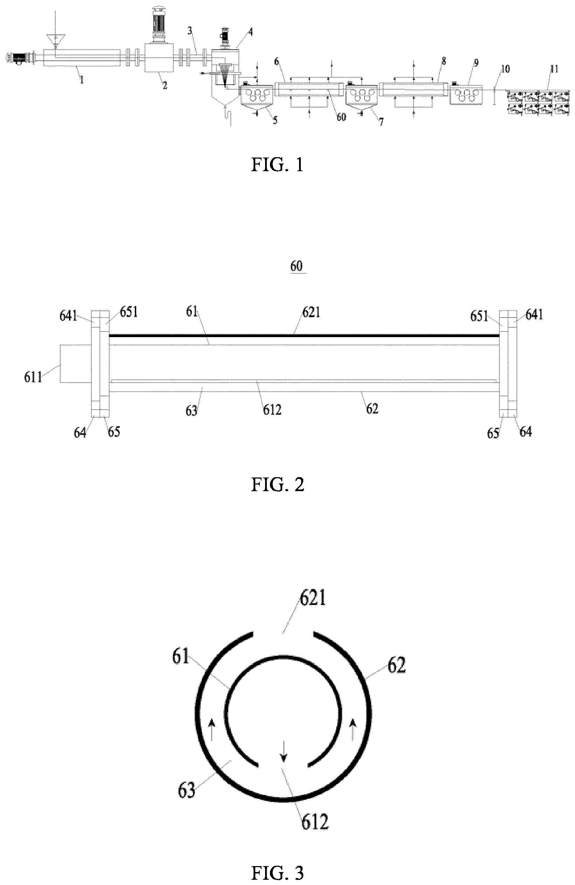

According to a preferred embodiment of the present invention, the above flow rate can be achieved by allowing the drying to be performed in a drying and heating box as shown in FIG. 2. The structure of said drying and heating box will be described below.

The drying gas may be nitrogen gas or other inert gas, and the pressure is preferably controlled to within a range of 0-1MPa, preferably 0.4-0.6MPa.

In the present invention, a temperature of the drying gas may be within a range of 0-140°C, preferably 40-80°C, which can further accelerate removal of the solvent from the fiber precursors.

For convenience of description in the present invention, the fiber filaments before stretching and after spinning are referred to as fiber precursors or gel filament strands, and the product after the stretching process is referred to as a fiber filament product.

In the present invention, the fiber may be a variety of plastic filament products, for example, one or more selected from a group consisting of polyethylene and acrylon.

As described above, since the spinning process imposes high requirements on the fluid of the cooling formation and the drying gas, in order to improve the utilization rate of the fluid and the solvent and reduce its pollution to the environment, the spinning method provided by the present invention preferably further comprises recovering the solvent in the fluid after the cooling formation and the solvent in the drying gas after the drying process.

Because the spinning method in the present invention adopts a low-temperature quenching mode, the volatility of the solvent in a low-temperature stage (namely the cooling formation stage) is low, the gas phase is basically free of the solvent, the mixed gas will exist in the form of an aerosol, the gas only needs a simple separation mode of cyclone separation, so as to separate the coolant (especially the gas for cooling) from the solvent, thereby recovering and recycling the coolant and the solvent. The gas temperature in the drying stage is high, a large amount of solvent volatilizes, the separation of drying gas and solvent can be favorably implemented only by adopting a deep separation mode.

Therefore, the present invention adopts the mode of carrying out sectional treatment with the return gas from different temperature points, thereby implementing reasonable distribution of energy consumption in the system, and causing that the solvent recovery rate reaches 95% or more. Preferably, the deep separation mode is an integrated mode of cooling separation - cryogenic separation - compression - cooling separation - adsorption and desorption, wherein the cooling separation temperature is controlled to be lower than 40°C, and the cryogenic separation temperature is controlled to be lower than -5°C, so that the solvent recovery rate is larger than 95%, the gas is recycled, and the solvent is recovered and recycled. Therefore, according to a preferred embodiment of the present invention, the solvent in the fluid after the cooling formation is recovered by means of a cyclone separation, and the solvent in the drying gas is recovered by means of a combination of cryogenic separation and adsorption-desorption.

Preferably, the adsorbent for adsorption may be one or more selected from a group consisting of activated carbon, coconut shell activated carbon and carbon molecular sieve. The specific operation and conditions of the adsorption and desorption can be carried out with reference to the prior art.

According to a specific embodiment of the present invention, the dry spinning method based on low-temperature dry gas quenching forming process of the high-performance polyethylene provided by the present invention comprises the following steps: subjecting an ultra-high molecular weight polyethylene raw material, a solvent and a spinning auxiliary agent to a pre-swelling treatment, then dissolving and shearing a spinning solution in a twin-screw extruder, subsequently pumping the spinning solution to a static mixer to carry out an uniform mixing, sending the spinning solution to a spinning box, extruding the spinning solution by a metering pump through a spinning assembly, and forming by adopting a low-temperature and ring-blowing dry gas quenching manner, preheating the formed nascent gel filament strand by five hot rollers, delivering the nascent gel filament strand into a drying and heating box, carrying out high-speed volatilization in regard to the solvent on a surface of the fiber by an air knife, entering the treated gel filament strand into a pre-stretching system to obtain semi-finished fiber filaments, sending the semi-finished fiber filaments into a stretching system for carrying out stretching for several times, forming a fiber filament product, and recovering the solvent in the technological process by a solvent recycling device.

According to a preferred embodiment of the present invention, the spinning solution comprises polyethylene, solvent and spinning auxiliary agent, the weight ratio of polyethylene to solvent is 1-30:100, preferably 4-20:100, and the weight ratio of spinning auxiliary agent to polyethylene is 0.3-3:100, preferably 0.5-2: 100.

The polyethylene may be various ethylene polymer product which can be used for spinning, preferably, the number average molecular weight of the polyethylene is within a range of 4,000,000-5,000,000, it may be the polyethylene prepared with various processes such as a Ziegler Natta method, a metallocene catalysis method.

The solvent may be any of various organic solvents capable of sufficiently swelling polyethylene, preferably an aromatic solvent containing one or more benzene rings, such as one or more selected from a group consisting of decalin, tetrahydronaphthalene, toluene and xylene.

The spinning auxiliary agent may be any of a variety of materials that aid in spinning, such as one or more selected from a group consisting of antioxidants, plasticizers, modifiers and lubricants.

In the present invention, the stretching ratio (drawing ratio) of the stretching process can be 1,000 times or more, for example, 160-1,200; the stretching ratio is preferably within a range of 600-900, in order to obtain the fiber filaments with a fine denier. The stretching process may be carried out in one or more time, preferably in a plurality of times. When the stretching process is performed in a plurality of times, the stretching ratio refers to a total stretching ratio.

Because the fiber filaments in the present invention have a high strength, the fiber filaments can be subjected to stretching (drafting) under a high stretching ratio, and can obtain fine fibers with monofilament diameter not more than $30\mu m$, which is a level that cannot be reached by the similar products at present.

The stretching ratio refers to a ratio of the length of the fiber filament product after stretching to the length of the fiber precursor after the cooling formation.

Preferably, the stretching ratio of the spray nozzle is within a range of 6-30 times, the pre-stretching ratio of the spinning preparation is within a range of 1-3.5 times, and the stretching ratio of the post-spinning is within a range of 6-20 times.

Preferably, the method of the present invention further comprises winding the stretched fiber filament product to facilitate product storage.

In the present invention, the specific operations and conditions of melt extrusion, spinning, stretching and winding can be performed with reference to the prior art.

The spun fiber obtained by the method of the invention is a crystalline polymers with an irregularity of not more than 1.5%, preferably 0.9-1%, and a crystallinity measured by Differential Scanning Calorimetry (DSC) within a range of 60-95%, preferably 85-90%; the melting point measured by XRD is within a range of 148-151°C, preferably 149-150°C. The crystallinity measured by X-ray Diffraction (XRD) is within a range of 60-95%, preferably 80-90%; the grain size along the normal direction of the (020) crystal plane within a range of 7.4-9.6nm, preferably 7.8-9nm; a grain size along the normal direction of the (110) crystal plane within a range of 8.8-11.5nm, preferably 8.9-10 nm; and a grain size along the normal direction of the (200) crystal plane within a range of 7.3-11nm, preferably 7.8-10.5 nm.

The polyethylene spun fiber prepared with the method of the present invention has a breaking strength more than 40CN/dtex, and a modulus more than 1,400 CN/dtex, preferably 1,800 CN/dtex, the properties of the polyethylene spun fiber are far higher than those of the similar product obtained by the method in the prior art.

The coefficient of variation (CV) of elongation and the coefficient of variation (CV) of strength of the polyethylene spun fiber obtained by the preferred embodiment of the present invention are both lower than 5%, preferably lower than 2% and 1.5% respectively, and within the range of 1.5-1.9% and 1.15-1.45% respectively, both meet the quality requirements of superior products.

Preferably, the fiber filament has a denier within a range of 40-80 dtex, preferably 40-55 dtex.

The high-performance spun fiber can be obtained with the fiber spinning method provided by the present invention, and is expected to be applied to meet the requirements of high elasticity modulus and high breaking-strength such as parachutes for aerospace, anchor ropes, fixed ropes for drilling platforms, bulletproof products, civil sport equipment, stab-resistant products, medical treatment materials, marine aquaculture fish boxes and fish nets.

In the present invention, the breaking strength, the modulus, the coefficient of variation (CV) of elongation and the coefficient of variation (CV) of strength can be respectively measured according to the methods of the National Standards GB/T29554-2013 and GB/T19975-2005 of China.

According to a preferred embodiment of the present invention, the fiber spinning process of the present invention is performed in a fiber spinning system shown in FIG. 1, the fiber spinning system comprises a melt extrusion unit, a spinning unit, a drying unit, a stretching unit and a winding unit, wherein the melt extrusion unit provides the spinning unit with the molten spinning raw materials, the drying unit is used for drying fiber precursors spun by the spinning unit and removing the solvent, the stretching unit is used for stretching the fiber precursors dried by the drying unit; it is characterized in that the spinning unit comprises a spinning box, a cooling fluid supply device and a spinneret orifice disposed in the spinning box, the cooling fluid supply device provides cooling fluid to the spinning box, such that the fiber precursors sprayed from the spinneret orifice in the spinning box are quenched and formed.

Preferably, as shown in FIG. 2, the drying unit comprises a drying and heating box 6 including a box body and an air knife 60, a drying chamber for drying the material is provided in the box body, the air knife 60 is disposed in the drying chamber; a second air outlet 621 of the air knife 60 is arranged to align with the materials; the box body is opened with a feed inlet, a discharge outlet, a drying gas inlet and a drying gas outlet which are in communication with the drying chamber, an air inlet 611 of the air knife 60 is in communication with the drying gas inlet, and the second air outlet 621 of the air knife 60 is in communication with the drying gas outlet.

The air knife is disposed mainly for powerfully blowing the solvent precipitated on the fiber surface to ensure the dry surface of the gel filament strands.

When in use, an air output quantity and an air outlet direction of the air knife 60 can be adjusted according to the practical requirements, the dry gas entering the drying chamber via the drying gas inlet can get into the air knife 60 through the air inlet 611, such that the dry gas is intensively blown by the air knife 60 with a certain air output quantity and air outlet direction to the materials, such that the materials are subject the rapid air drying.

Referring to FIG. 2, wherein the feed inlet and the discharge outlet are respectively located at two opposite sides of the box body (referring to left and right sides of the drying and heating box 6 shown in FIG. 2), the drying gas inlet and the drying gas outlet are respectively located at two opposite sides of the box body (referring to upper and lower sides of the drying and heating box 6 shown in FIG. 2). A plurality of air knives 60 may be arranged in the drying chamber, and the plurality of air knives 60 extend along a direction perpendicular to the feeding and discharging direction of the materials and are arranged at intervals along the feeding and discharging direction of the materials (refer to the left and right direction shown in FIG. 1). The arrangements can further improve the drying efficiency and effect.

In case that a plurality of air knives 60 are disposed in the drying chamber, referring to FIG. 1, a plurality of the drying gas inlets and drying gas outlets may be arranged on the box body, respectively. It is understandable that the positions corresponding to the black arrows of the drying and heating box 6 shown in FIG. 1 are exactly the drying gas inlet and the drying gas outlet.

Wherein the internal structure of the air knife is shown in FIG. 2. By means of adjusting the position of bearing rod, and controlling the velocity and the direction of blown-out wind, the solvent precipitated on a surface of the gel filament strand is rapidly blown and dried.

As shown in FIG. 2, the air knife 60 comprises an inner barrel 61 and an outer barrel 62 which are coaxially sleeved, one end of the inner barrel 61 has an opening shape to form an air inlet 611 of the air knife 60, a first air outlet 612 in communication with the air inlet 611 is opened on a barrel wall of the inner barrel 61, a second air outlet 621 (the second air outlet 621 is an air outlet of the air knife 60) is opened on a barrel wall of the outer barrel 62, a radial space is provided between the inner barrel 61 and the outer barrel 62 to form a communication channel 63 for communicating the first air outlet 612 with the second air outlet 621, at least one of the inner barrel 61 and the outer barrel 62 is set to be capable of moving along a radial direction of the air knife 60 so as to adjust an air output quantity and an air outlet direction of the second air outlet 621.

In the above embodiment, it can be understood that when in use, the gas can be introduced into the inner barrel 61 through the air inlet 611, and then enter the communication channel 63 through the first air outlet 612, and finally exit through the second air outlet 621. When the inner barrel 61 is moved to gradually approach the second air outlet 621, the air output quantity of the second air outlet 621 will be gradually reduced; when the inner barrel 61 is moved to be gradually away from the second air outlet 621, the air output quantity of the second air outlet 621 will be gradually increased. When the barrel wall of the inner barrel 61 partially covers the second air outlet 621, the air outlet direction of the second air outlet 621 can be altered.

In addition, at least one of the inner barrel 61 and the outer barrel 62 is set to be movable along a radial direction of the air knife 60, it includes the three modes as follows: the first mode is that the outer barrel 62 is fixed, and the inner barrel 61 is arranged to be movable along the radial direction of the air knife 60 relative to the outer barrel 62; the second mode is that the inner barrel 61 is fixed, and the outer barrel 62 is arranged to be movable along the radial direction of the air knife 60 relative to the inner barrel 61; the third mode is to arrange that the inner barrel 61 and the outer barrel 62 are movable relative to each other along the radial direction of the air knife 60.

By adopting above-mentioned technical scheme, the air output quantity and the air outlet direction at an air outlet of the air knife are adjustable, such that an use of the air knife 60 is more flexible, so as to meet a variety of use requirements; when the air knife is applied to the drying and heating box, it can effectively improve drying efficiency and effect to the materials.

In the present invention, the first air outlet 612 and the second air outlet 621 may have any suitable shape and disposed position as long as the above-mentioned functions can be achieved. For example, the cross-sections of the first air outlet 612 and the second air outlet 621 may be oval, square, etc., and the first air outlet 612 and the second air outlet 621 may be arranged at intervals along the axial direction and/or the circumferential direction of the air knife 60. Of course, there may be a plurality of the first air outlets 612 and a plurality of the second air outlets 621, respectively.

According to a preferred embodiment of the present invention, referring to FIG. 2 and FIG. 3, there is a first air outlet 612 and a second air outlet 621, the first air outlet 612 has a long strip shape and extends along an axial direction of the inner barrel 61, the second air outlet 621 has a long strip shape and extends along an axial direction of the outer barrel 62. Under the circumstance, the first air outlet 612 and the second air outlet 621 are misaligned from each other in a circumferential direction of the air knife 60; that is, the first air outlet 612 and the second air outlet 621 are preferably not aligned, in order to prevent the gas entering the inner barrel 61 from being directly effluent from the second air outlet 621 after being discharged from the first air outlet 612.

Preferably, as shown in FIG. 3, wherein the first air outlet 612 and the second air outlet 621 are arranged opposite in the circumferential direction of the air knife 60.

In addition, the cross-sections of the first air outlet 612 and the second air outlet 621 are preferably rectangular, an opening angle of the first air outlet 612 and the second air outlet 621 in the circumferential direction of the air knife 60 is within a range of 0-90°, preferably 25-40°.

In the present invention, in order to prevent the gas entering the air knife 60 from being discharged from other ports of the inner barrel 61 and/or the communication channel 63, one end of the inner barrel 61 departing from the air inlet 611 is closed, and two ends of the communication channel 63 are closed. The inner barrel 61 can be closed by an end wall integral with the barrel wall thereof, or can be closed by an installation component (will be described below) or other structure (such as the drying and heating box described below) on which an air knife is to be mounted; the closure of the communication channel 63 may be performed by means of an installation components or other structure which the air knife is to be mounted.

In the present invention, in order to integrate the inner barrel 61 and the outer barrel 62 into an entirety and facilitate the assembly and disassembly of the air knife 60 as a whole, the air knife 60 may further comprise an installation component for mounting the inner barrel 61 and the outer barrel 62. The installation component may be any component which can integrate the inner barrel 61 with the outer barrel 62 together and allow movement of the inner barrel 61 and/or the outer barrel 62.

For the sake of simplifying a structure of the air knife 60 and reducing the manufacturing costs of said air knife 60, according to a preferred embodiment of the present invention, for instance, the outer barrel 62 is fixed, and the inner barrel 61 is movable relative to the outer barrel 62 along the radial direction of the air knife 60, as shown in FIG. 2, the installation component comprises two movable flanges 64 respectively mounted at both ends of the inner barrel 61, and two fixed flanges 65 respectively mounted at both ends of the outer barrel 62, wherein the two movable flanges 64 are respectively connected with the two fixed flanges 65 (i.e., the movable flange 64 and the fixed flange 65 located at the same end of the air knife 60 are connected), and the two movable flanges 64 are arranged to be lockably movable relative to the corresponding fixed flanges 65 along a radial direction of the air knife 60.

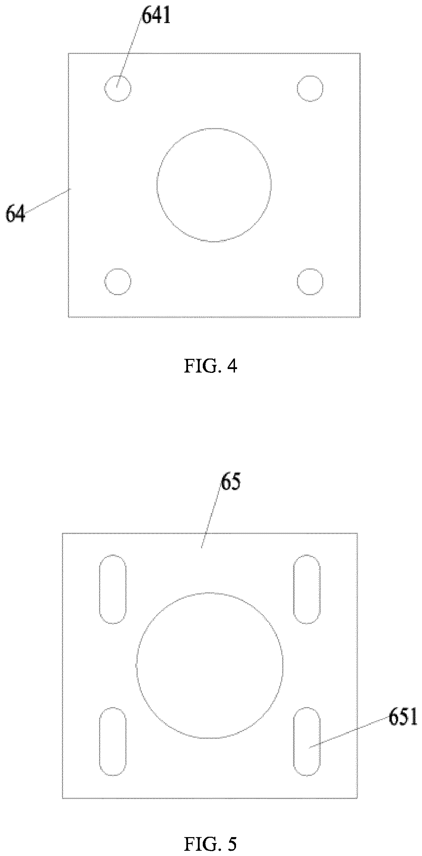

The movable flanges 64 are sealingly mounted in the inner barrel 61, and the fixed flanges 65 are sealingly mounted in the outer barrel 62. As shown in FIG. 4 and FIG. 5, the movable flange 64 is provided with mounting holes for mounting the inner barrel 61, and the fixed flange 65 is provided with mounting holes for mounting the outer barrel 62, since the diameter of said inner barrel 61 is smaller than that of the outer barrel 62, the diameter of the mounting holes of the movable flange 64 is smaller than that of the mounting holes of the fixed flange 65.

As shown in FIG. 4, the movable flange 64 is located outside the fixed flange 65, two ends of the inner barrel 61 sequentially penetrate through the mounting holes of said fixed flange 65 and said movable flange 64, two ends of the outer barrel 62 sequentially penetrate through the mounting holes of the fixed flange 65. Under the circumstance, both ends of the communication channel 63 may be respectively sealed by two movable flanges 64.

In the above description, it should be noted that, referring to FIG. 2, the left end face of the inner barrel 61 may extend beyond the movable flange 64 at the left side, it can also be located inside the movable flange 64, or be flush with the left end face of the movable flange 64. The right end face of the inner barrel 61 may extend beyond the movable flange 64 at the right side, it can also be flush with the right end face of the movable flange 64, and under the two circumstances, the right end port of the inner barrel 61 may be sealed by an end wall integrated with the cylinder wall of the inner barrel, or be sealed with other structures which is to be mounted with the air knife 60; the right end face of the inner barrel 61 may also be located in the movable flange 64 on the right side, in which case, the right end port of the inner barrel 61 may be sealed by an end wall integral with the cylinder wall of the inner barrel, or be sealed by the movable flange 64, that is, the mounting hole of the movable flange 64 for mounting the inner barrel 61 is not a through hole, but a semi-closed hole having a right side wall.

Further, as shown in FIG. 4 and FIG. 5, the movable flange 64 and the fixed flange 65 may be connected with each other through fasteners, each of the movable flange 64 and the fixed flange 65 is provided with through holes for allowing the fasteners to pass through, the through holes in the movable flange 64 are circular holes 641, and the through holes in the fixed flange 65 are oblong holes 651.

In the above description, it should be noted that the pore diameter of the circular hole 641 is matched with the diameter of the fastener, the oblong hole 651 has a small pore diameter and a large pore diameter, the small pore diameter is matched with the diameter of the fastener, and the large pore diameter is larger than the diameter of the fastener. The fastener achieves locking and attachment of the movable flange 64 to the fixed flange 65 by locking the circular hole 641 at a certain position of the oblong hole 651 along the extension direction of the oblong hole 651. The extension direction of the oblong hole 651 is exactly the moving direction of the inner barrel 61. For example, as illustrated in FIG. 4, the oblong hole 651 extends in a vertical direction, and under this circumstance, the inner barrel 61 and the movable flange 64 can move up and down along the vertical direction relative to the outer barrel 62 and the fixed flange 65, and the first air outlet 612 and the second air outlet 621 are located in the vertical direction.

In order to strengthen the connection, as shown in FIG. 4 and FIG. 5, a plurality of circular holes 641 may be disposed on the movable flange 64, and a plurality of oblong holes 651 may be disposed on the fixed flange 65 accordingly, the plurality of oblong holes 651 may extend in the consistent direction.

When in use, the fasteners may be loosened and, after moving the inner barrel 61 and the movable flange 64 to the desired positions, the fasteners are tightened again to lock the movable flange 64 in regard to the fixed flange 65.

It should be noted that in the present invention, the fastener may be any component capable of connecting the movable flange 64 to the fixed flange 65. For example, the fasteners are bolts, in which case the circular holes 641 and the oblong holes 651 may be threaded holes.

In the above description, the air knife 60 disposed in the drying and heating box 6 can strongly blow the solvent precipitated on a surface of the fiber precursors, thereby ensuring dryness of the surface of said fiber precursors. The drying gas used in the air knife 60 may be nitrogen gas or other inert gas, and the pressure is preferably controlled to within a range of 0-1MPa, further preferably 0.4-0.6 MPa. The temperature of the drying gas may be within a range of 0-140°C, preferably 40-80°C. The drying gas discharged from the air knife 60 is preferably brought into contact with the fiber precursors at a speed not lower than 20 m/s (preferably 30-40 m/s). This can further accelerate removal of the solvent from the fiber precursors.

Further, as shown in FIG. 1, the drying unit may further comprise a heated roller type stretching machine 5 and a non-heated roller type stretching machine 7 which are respectively disposed in front of and behind the drying and heating box 6. Both the heated roller type stretching machine 5 and the non-heated roller type stretching machine 7 are preferably a five-roller type stretching machine. It should be noted that the roller stretching machine of the drying unit mainly plays a drying role, it does not apply a large stretching force to stretch, and its stretching function is negligible.

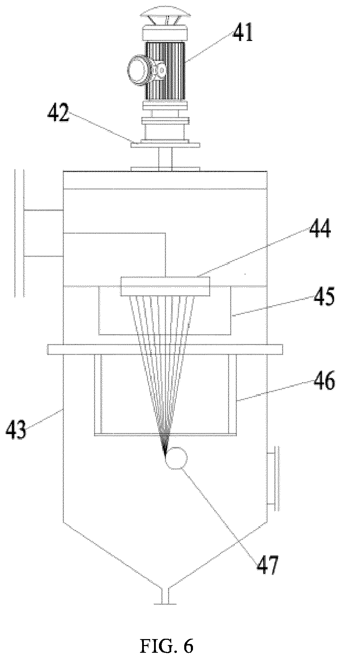

As shown in FIG. 6, the melt extrusion unit in the present invention may comprise a twin-screw extruder 1, a booster pump 2 and a static mixer 3, the spinning unit may include a cooling fluid supply device and a spinning box 4, the stretching unit may comprise a stretching hot box 8 and a stretching machine 9, and the winding unit may include a winder 11.

Wherein the twin-screw extruder 1 is used for subjecting the spinning solution to a melt extrusion to form a stable melt; the booster pump 2 is used for applying a stable pressure output to the melt so as to ensure the stable output of the melt; the static mixer 3 is used for forming a stable and uniform melt; the cooling fluid supply device is used for supplying the spinning box 4 with a cooling fluid and subjecting the fiber precursors sprayed from spinneret orifices (will be described below) in the spinning box 4 to quenching forming; the spinning box 4 is used for converting the melt into a gel elastic fluid and simultaneously performing dry gas quenching to form the solid gel filaments (i.e., fiber precursors); the stretching hot box 8 and the stretching machine 9 serve to stretch the dried fiber precursors, wherein the stretching hot box 8 is used for hot stretching so as to volatilize the solvent during the stretching process; the winder 11 is used to wind the stretched fiber precursors.

In addition, the fiber spinning system may further include an oiling machine 10 before the winder 11 for subjecting a surface of the fiber precursors to an oiling treatment.

It shall be noted that in an embodiment of the fiber spinning system shown in FIG. 1, the black arrows represent the gas flow direction.

According to a preferred embodiment of the spinning box 4 of the present invention, as shown in FIG. 6, the spinning box 4 comprises an electric motor 41, a metering pump 42, a spinning box body 43, a spinneret assembly 44, a thermal insulation oil jacket 45, a circular blowing part 46 and a godet 47. The electric motor 41 and the metering pump 42 are arranged on the spinning box body 43, the spinneret assembly 44, the thermal insulation oil jacket 45, the circular blowing part 46 and the godet 47 are disposed in the spinning box body 43.

Wherein the spinneret assembly 44 includes spinneret orifices through which the spinning solution is ejected to form fiber precursors. The circular blowing part 46 includes an annular duct extending along the circumferential direction of the spinning box body 43, and the annular duct having openings facing the center, and the cooling fluid supply device provide the annular duct with a fluid having a temperature of not more than -10°C so as to circularly blow the cooling fluid towards the spinneret orifices.

Wherein the metering pump 42 is a material metering device, and the electric motor 41 is used for driving the metering pump 42 to perform metering and extrusion. The spinning box body 43 is a box body capable of providing a constant-temperature chamber. The spinneret assembly 44 is provided with a pressing plate, a filter pad and a spinneret plate which are sequentially disposed from up to down; the pressing plate and the spinneret plate can be fastened by means of bolts, the spinneret orifices are arranged on the spinneret plate, the spinning solution is ejected through the spinneret orifices to form the fiber precursors. The thermal insulation oil jacket 45 can provide required heat for volatilization of the solvent, ensures that the spinneret plate surface is stabilized at a certain temperature, forms the steady flow state of melt, prevents blocking of melt on the spinneret plate surface or the broken filaments caused by an influence of the quenching gas. The circular blowing part 46 serves to provide a stable circular blow gas and ensure a balanced gas flow around the filament strands. The circular blowing part 46 includes an annular duct extending along the circumferential direction of the spinning box body 43, and the annular duct having openings facing the center, and the cooling fluid supply device provide the annular duct with a fluid having a temperature of not more than -10°C so as to circularly blow the cooling fluid towards the spinneret orifices. The godet 47 serves to alter an orientation of the fiber precursors.

Preferably, the opening ratio of the annular duct is 30-35%, and the ratio of the opening size to the inner diameter of the spinning box body 43 is 1: 4-10. If the ratio of the opening size to the inner diameter of the spinning box body 43 is too small, the solvent in the box body cannot be effectively brought out by the circular blowing gas, the solvent is accumulated in the spinning box body, the recovery efficiency is greatly reduced, and a large amount of solvent droplets are adhered to a surface of the fiber, which is not favorable for subsequent stretching and drying; if the ratio of the opening size to the inner diameter of the spinning box body is too large, the gas speed will be greatly increased, causing vibration during the falling process of the fiber, thereby adversely influencing the quality of fiber precursors.

The annular duct is arranged between the thermal insulation oil jacket 45 and the godet 47, the diameter of said annular duct is not lower than 80cm, the ratio of the diameter of the annular duct to the inner diameter of the spinning box body 43 is preferably 1: 5-10.

According to a preferred embodiment of the present invention, the fiber spinning system of the present invention further comprises a solvent recovery unit for recovering the solvent in the whole spinning process, so that the cooling gas and the drying gas as well as the spinning solvent can be recycled, thereby reducing the environmental pollution.

As previously mentioned, the inventors of the present invention have discovered that the solvent content in the gas in the low temperature stage is low, the removal of solvent can be achieved by a simple cyclone separation process, while a deep separation mode is adopted in the high temperature stage. Thus it is preferable that the solvent recovery unit comprises a cyclone separation device for recovering the solvent from the spinning unit, and a composite separation device for recovering the solvent from the drying unit, wherein the composite separation device adopts a mode of combining a cryogenic separation with the adsorption-desorption.

The composite separation device comprises a cooler, a cryogenic cooler, a gas-liquid separator and an adsorption-desorption device which are sequentially connected, and performs the integrated operations of cooling separation - cryogenic separation - compression - cooling separation - adsorption and desorption, so as to fulfill the purpose of deep separation. Wherein the cooling separation temperature is controlled to be lower than 40°C, the cryogenic separation temperature is controlled to be lower than -5°C, such that the solvent recovery rate is more than 95%, the gas is recycled, and the solvent is recovered and recycled.

Preferably, the adsorbent for adsorption is one or more selected from a group consisting of activated carbon, coconut shell activated carbon and carbon molecular sieve. The specific operations and conditions of the adsorption and desorption can be carried out with reference to the prior art.

The dry spinning production process based on low-temperature dry air quenching formation of the high-performance polyethylene by using the fiber spinning system comprises the following steps: mixing a polyethylene raw material, a solvent and an auxiliary agent according to a certain ratio to prepare a spinning solution, pre-swelling the mixture, feeding the pre-swollen solution into a cooling kettle for stirring, pumping the solution into a twin-screw extruder for dissolving and shearing, pumping the solution by a booster pump through a static mixer and feeding into a metering pump for metering, extruding gel filament strands from a spinning box, using a thermal insulation jacket to ensure the temperature of the solvent volatilization on the filament strands and the temperature of the spinneret plate surface, performing the quenching formation through the circular blow of low-temperature gas during the falling process of gel filament strands, preheating the formed gel filament strands by five hot rollers and feeding it into a drying and heating box, volatilizing the solvent on the surface of fibers at a high speed by air knives, stretching the treated gel filament strands with a pre-stretching system and a stretching system for many times to form a fiber filament product, and recovering the solvent which is escaped from cooling formation and drying process through a solvent recovery system.

The thermal insulation jacket mainly serve to provide enough heat for volatilization of the solvent on a surface of gel filament strands, protecting the temperature of the spinneret plate surface from being influenced by the circular blowing of low-temperature gas, and ensuring the stable extrusion of the gel filament strands.

The extrusion rate of spinneret plate is preferably within a range of 1-10 m/min.

The present invention possesses prominent features as follows: compared with the existing high-performance polyethylene fiber spinning process, the gel filament strands produced with the method is subjected to pre-stretching and stretching, the conditions of broken filaments and broken ends are avoided, the improvement effect of fiber performance indicators is obvious, the fiber has a breaking strength greater than 45CN/dtex, a modulus larger than 1,800 CN/dtex, and a yarn levelness lower than 1%, a fiber yield more than 98%, and a solvent recovery rate higher than 95%.

The present invention will be further illustrated below with reference to examples. Unless otherwise specified in the following examples, the raw materials are commercially available.

The DSC crystallinity is calculated according to the following Formula 1:

$$X_c = \frac{\Delta H}{\Delta Hf} \times 100\% \qquad \text{(Formula 1)}$$

In Formula 1, $X_c$ denotes the crystallinity, $\Delta H$ denotes the melting enthalpy of the fiber sample; $\Delta Hf$ denotes the melting enthalpy of the fully crystalized polyethylene, it is 293 J/g.

The XRD crystallinity is calculated according to the following Formula 2, and the grain size L is calculated according to Scherrer Formula (Formula 3):

$$X_c = \frac{Ic}{Ia+Ic} \times 100\% \qquad \text{(Formula 2)}$$

$$L_{hkl} = \frac{\lambda k}{H\cos\theta} \qquad \text{(Formula 3)}$$

In Formula 2, $X_c$ denotes the crystallinity, and $I_a$ denotes the relative intensity of the amorphous peak; $I_c$ denotes the relative intensity of the crystalline region;

In Formula 3, $L_{hkl}$ denotes the grain size (in nm), $\lambda$ denotes the wavelength of X-rays; k denotes the Scherrer constant; H denotes the full width at half maximum of the hkl diffraction peak; $\theta$ denotes the Bragg angle of the hkl diffraction.

The breaking strength, the breaking elongation, the modulus, the coefficient of variation CV% of elongation and the coefficient of variation CV% of strength are measured according to the method of the National Standard GB/T19975-2005 of China.

The Denier is measured with a yarn threading machine. The specific measurement method comprises the steps of rotating the yarn threading machine for 100 circles, weighing and measuring the weight of the fibers, and converting the weight to obtain the Denier value of the product. The measurements are carried out for 5 times in succession, the average value is exactly the Denier value of the batch of product. The ratio of an absolute value of the difference between the Denier value having a maximum discrepancy from the average value and the average value to the average value is denoted as an irregularity. The method is suitable for testing the Denier value and irregularity of fiber filaments in each stage (cooling formation, drying and stretching).

In the following examples, the fiber spinning system shown in FIG. 1 is used, which includes a twin-screw extruder, a spinning box, a five hot roller stretching machine, a drying and heating box, a five roller stretching machine I, a stretching hot box, a five roller stretching machine II and a winder which are sequentially connected. Wherein the spinning box body is internally provided with an annular duct for circular blowing gas, the opening ratio is 35%, the opening size is 5mm, the inner diameter of the spinning box body is 1,000×1,200mm, the drying and heating box includes a box body and a plurality of air knives which are uniformly arranged along the axial direction (the inlet and outlet direction of materials) of the box body, two adjacent air knives are separated with a certain distance, a drying chamber for drying the materials is arranged in the box body, the air knives are disposed in the drying chamber, a second air outlet of the air knives is arranged to align with the material, the box body is opened with a feed inlet, a discharge outlet, a drying gas inlet and a drying gas outlet which are in communication with the drying chamber, the air inlet is in communication with the drying gas inlet, and the second air outlet is in communication with the drying gas outlet. The feed inlet and the discharge outlet are respectively positioned at two opposite sides of the box body, and the air knife includes an inner barrel and an outer barrel which are coaxially sleeved, one end of the inner barrel has an opening shape to form an air inlet of the air knife, a first air outlet in communication with the air inlet is opened on a barrel wall of the inner barrel, the first air outlet has a long strip shape and extends along an axial direction of the inner barrel, a second air outlet is opened on a barrel wall of the outer barrel, the second air outlet has a long strip shape and extends along an axial direction of the outer barrel; a radial space is provided between the inner barrel and the outer barrel to form a communication channel for communicating the first air outlet with the second air outlet; the first air outlet and the second air outlet are misaligned from each other in a circumferential direction of the air knife; an opening angle of the first air outlet and the second air outlet in the circumferential direction of the air knife is 40°; both the inner barrel and the outer barrel are set to be capable of moving along a radial direction of the air knife so as to adjust an air output quantity and an air outlet direction of the second air outlet.

Firstly, mixing a solvent, polyethylene powder and a spinning auxiliary agent, pre-swelling the ultra-high molecular weight polyethylene powder, then feeding the mixture into a twin-screw extruder for sufficient dissolution and shearing, then feeding into a static mixer through a booster pump, pumping the stabilized solution into a metering pump and extruding from a spinning box, wherein the extrusion speed is within a range of 1-10 m/min; the extruded gel filament strands pass through a thermal insulation oil jacket (200°C) which ensuring the volatilization temperature of the solvent and the stable temperature of a spinneret plate. The gel filament strands passing through the thermal insulation oil jacket is rapidly molded by circular blowing dry air and quenching, the pressure of the circular blowing air is within a range of 0-50kPa, the temperature is within a range of -50°C to -10°C, the quenched filament strands are rapidly cured and molded to obtain the nascent gel filaments, the nascent gel filaments pass through a godet and enter a five hot roller with a temperature of 30-100°C; through the heating of the five hot roller, the solvent on a surface of the fiber is volatilized; the filament strands are fed into a drying and heating box, the air knife in the drying and heating box rapidly volatilizes the solvent on a surface of the fiber, and the dry hot air sent out via the air knife is hot nitrogen gas. The internal temperature of the hot stretching box is controlled to be within a range of 40-150°C, the filament strands are then subjected to the pre-stretching to obtain semi-finished filaments, the semi-finished filaments are subjected to stretching, forming, winding and rolling up, and the total stretching ratio is 160-1,200 times (including jet stretch). The solvent is recovered by using the staged recovery mode of different temperature points as mentioned above, a cyclone separator is used in the low-temperature zone, the high-temperature zone adopts an integrated mode of cooling separation - cryogenic separation - cooling separation - adsorption and desorption, the temperature of the cyclone separation and the cooling separation is lower than 40°C, and the temperature of the cryogenic separation is lower than -5°C.

Example 1

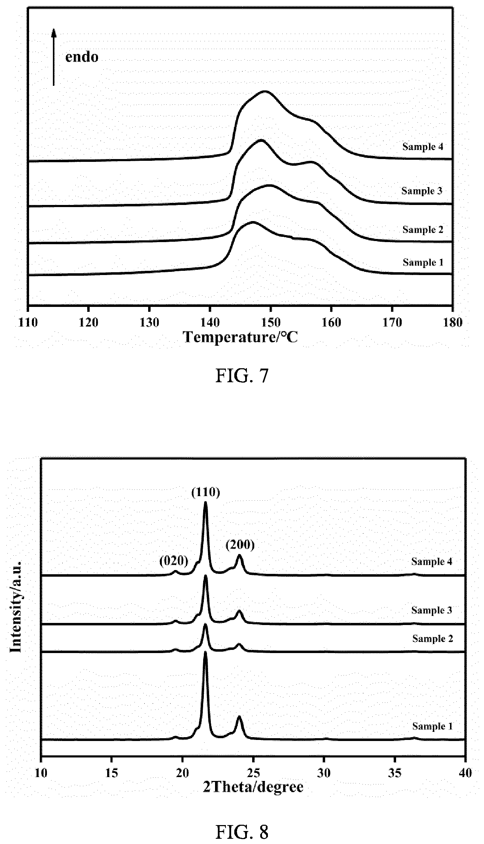

The mass/volume ratio of a raw material (polyethylene with a number-average molecular weight of 4,870,000) to a solvent (decalin) was 8%, the auxiliary agent comprised an antioxidant and calcium stearate, the used amounts of the antioxidant and the calcium stearate were respectively 0.7% and 0.3% by mass of the raw material, the swelling temperature was 98°C, the extrusion rate was 3 m/min, the temperature of the thermal insulation oil jacket was 200°C, the circular blowing gas was air with a quenching temperature of -25°C, the time was 0.5s, the gas pressure was 0.4MPa, the hot roller temperature was 40°C, the temperature of drying and heating box was 40°C (the gas temperature of air knife was 40°C, the gas speed was 30 m/s, and the gas pressure was 0.4 MPa), the temperature of stretching hot box was 125°C, the pre-stretching ratio was 3 times, the temperature of multi-stage stretching hot box was 140-145°C, and the total stretching ratio was 220 times. The solvent was recovered by using the staged recovery mode of different temperature points as mentioned above, a cyclone separator was used in the low-temperature zone, the high-temperature zone adopted an integrated mode of cooling separation - cryogenic separation - cooling separation - adsorption and desorption, the temperature of the cyclone separation and the cooling separation was lower than 40°C, and the temperature of the cryogenic separation was lower than -5°C; the adsorbent was activated carbon. The DSC curve and the XRD diagram of the spun fiber were shown as Sample 2 in FIG. 7 and FIG. 8, respectively, the performance measurement indicators were shown in Table 1 below. The solvent recovery rate was 97.35%.

Table 1

|  | Sample 1 | Sample 2 | Sample 3 | Sample 4 |
|---|---|---|---|---|
| Denier, dtex | 48 | 48.3 | 48.2 | 48.4 |
| DSC crystallinity, % | 90 | 89 | 89 | 90 |
| DSC melting point, °C | 151 | 150.8 | 150.7 | 151 |
| XRD crystallinity, % | 90 | 89 | 89 | 90 |
| (020) Grain size, nm | 7.8 | 7.9 | 7.9 | 8 |
| (110) Grain size, nm | 9.9 | 9.9 | 9.9 | 10 |
| (200) Grain size, nm | 8 | 8.1 | 7.9 | 8 |
| Breaking strength, CN/dtex | 49.75 | 50.5 | 49.67 | 49.89 |
| Elongation at break,% | 1.68 | 1.72 | 1.78 | 1.71 |
| Modulus, CN/dtex | 1905 | 1930 | 1928 | 1902 |
| Coefficient of Variation(CV) of elongation, % | 1.67 | 1.82 | 1.58 | 1.87 |
| Coefficient of Variation(CV) of strength, % | 1.42 | 1.25 | 1.17 | 1.35 |

Example 2

The mass/volume ratio of a raw material (polyethylene with a number-average molecular weight of 4,870,000) to a solvent (decalin) was 8%, the auxiliary agent comprised an antioxidant and calcium stearate, the used amounts of the antioxidant and the calcium stearate were respectively 0.7% and 0.3% by mass of the raw material, the swelling temperature was 98°C, the extrusion rate was 3.25m/min, the temperature of the thermal insulation oil jacket was 200°C, the circular blowing gas was air with a quenching temperature of -20°C, the time was 0.7s, the gas pressure was 10kPa, the hot roller temperature was 50°C, the temperature of drying and heating box was 50°C (the gas temperature of air knife was 50°C, the gas speed was 30 m/s, and the gas pressure was 0.4 MPa), the temperature of stretching hot box was 125°C, the pre-stretching ratio was 3 times, the temperature of multi-stage stretching hot box was 140-145°C, and the total stretching ratio was 220 times. The solvent was recovered by using the staged recovery mode of different temperature points as mentioned above, a cyclone separator was used in the low-temperature zone, the high-temperature zone adopted an integrated mode of cooling separation - cryogenic separation - cooling separation - adsorption and desorption, the temperature of the cyclone separation and the cooling separation was lower than 40°C, and the temperature of the cryogenic separation was lower than -5°C; the adsorbent was activated carbon. The DSC curve and the XRD diagram of the spun fiber were shown as the Sample 2 in FIG. 7 and FIG. 8, respectively, the performance measurement indicators were shown in Table 2 below. The solvent recovery rate was 97.19%.

Table 2

|  | Sample 1 | Sample 2 | Sample 3 | Sample 4 |
|---|---|---|---|---|
| Denier, dtex | 49.2 | 48.7 | 49.1 | 49.3 |
| DSC crystallinity, % | 89 | 88 | 87 | 88 |
| DSC melting point, °C | 148.9 | 149.2 | 149.5 | 148.9 |
| XRD crystallinity, % | 88 | 87 | 88 | 87 |
| (020) Grain size, nm | 8 | 8.1 | 8.2 | 8 |
| (110) Grain size, nm | 9.9 | 9.8 | 9.9 | 9.9 |
| (200) Grain size, nm | 8.3 | 8.4 | 8.2 | 8.1 |
| Breaking strength, CN/dtex | 49.21 | 49.09 | 48.97 | 49.35 |
| Elongation at break,% | 1.96 | 1.97 | 1.93 | 1.95 |

(continued)

| | Sample 1 | Sample 2 | Sample 3 | Sample 4 |
|---|---|---|---|---|
| Modulus, CN/dtex | 1865 | 1878 | 1879 | 1876 |
| Coefficient of Variation(CV) of elongation, % | 1.56 | 1.63 | 1.54 | 1.67 |
| Coefficient of Variation(CV) of strength, % | 1.21 | 1.25 | 1.23 | 1.24 |

Example 3

The mass/volume ratio of a raw material (polyethylene with a number-average molecular weight of 4,250,000) to a solvent (decalin) was 8%, the auxiliary agent comprised an antioxidant and calcium stearate, the used amounts of the antioxidant and the calcium stearate were respectively 0.7% and 0.3% by mass of the raw material, the swelling temperature was 98°C, the extrusion rate was 3.25m/min, the temperature of the thermal insulation oil jacket was 200°C, the circular blowing gas was air with a quenching temperature of -15°C, the time was 0.54s, the gas pressure was 4kPa, the hot roller temperature was 40°C, the temperature of drying and heating box was 40°C (the gas temperature of air knife was 40°C, the gas speed was 30 m/s, and the gas pressure was 0.4 MPa), the temperature of stretching hot box was 125°C, the pre-stretching ratio was 3 times, the temperature of multi-stage stretching hot box was 140-145°C, and the total stretching ratio was 240 times. The solvent was recovered by using the staged recovery mode of different temperature points as mentioned above, a cyclone separator was used in the low-temperature zone, the high-temperature zone adopted an integrated mode of cooling separation - cryogenic separation - cooling separation - adsorption and desorption, the temperature of the cyclone separation and the cooling separation was lower than 40°C, and the temperature of the cryogenic separation was lower than -5°C; the adsorbent was activated carbon. The DSC curve and the XRD diagram of the spun fiber were shown as the Sample 3 in FIG. 7 and of FIG. 8, respectively, the performance measurement indicators were shown in Table 3 below. The solvent recovery rate was 97.22%.

Table 3

| | Sample 1 | Sample 2 | Sample 3 | Sample 4 |
|---|---|---|---|---|
| Denier, dtex | 49.5 | 48.9 | 49.3 | 49.7 |
| DSC crystallinity, % | 85 | 86 | 86 | 87 |
| DSC melting point, °C | 149.0 | 149.2 | 148.9 | 148.8 |
| XRD crystallinity, % | 85 | 84 | 85 | 83 |
| (020) Grain size, nm | 8.5 | 8.6 | 8.5 | 8.4 |
| (110) Grain size, nm | 9.9 | 9.8 | 10.0 | 9.7 |
| (200) Grain size, nm | 9.8 | 9.9 | 9.7 | 9.6 |
| Breaking strength, CN/dtex | 48.51 | 48.48 | 49.07 | 48.36 |
| Elongation at break,% | 1.99 | 2.03 | 2.02 | 2.07 |
| Modulus, CN/dtex | 1857 | 1862 | 1878 | 1867 |
| Coefficient of Variation(CV) of elongation, % | 1.87 | 1.76 | 1.79 | 1.81 |
| Coefficient of Variation(CV) of strength, % | 1.23 | 1.27 | 1.31 | 1.26 |

Example 4

The mass/volume ratio of a raw material (polyethylene with a number-average molecular weight of 4,250,000) to a solvent (decalin) was 8%, the mass percentage of an auxiliary agent (consisting of an antioxidant and calcium stearate in a weight ratio of 7:3) to the raw material is 0.8%, the swelling temperature was 98°C, the extrusion rate was 3m/min, the temperature of the thermal insulation oil jacket was 200°C, the circular blowing gas was air with a quenching temperature of -10°C, the time was 0.64s, the gas pressure was 5kPa, the hot roller temperature was 40°C, the temperature of drying and heating box was 40°C (the air temperature of air knife was 40°C, the gas speed was 30 m/s, and the gas pressure was 0.4 MPa), the temperature of stretching hot box was 125°C, the pre-stretching ratio was 3 times, the temperature of multi-stage stretching hot box was 140-145°C, and the total stretching ratio was 200 times. The solvent was recovered by using the staged recovery mode of different temperature points as mentioned above, a cyclone separator was used in the low-temperature zone, the high-temperature zone adopted an integrated mode of cooling separation - cryogenic separation - cooling separation - adsorption and desorption, the temperature of the cyclone separation and the cooling separation was lower than 40°C, and the temperature of the cryogenic separation was lower than -5°C; the adsorbent was activated carbon. Four tubes in the same batch were randomly taken out for testing, the DSC curve and the XRD diagram of the spun fiber were similar to those shown in FIG. 7 and FIG. 8, respectively, the performance measurement indicators were shown in Table 4 below. The solvent recovery rate was 97.17%.

Table 4

|  | Sample 1 | Sample 2 | Sample 3 | Sample 4 |
|---|---|---|---|---|
| Denier, dtex | 52 | 51.8 | 52.3 | 52.1 |
| DSC crystallinity, % | 80 | 81 | 81 | 81 |
| DSC melting point, °C | 148 | 148.5 | 148.5 | 149 |
| XRD crystallinity, % | 80 | 81 | 81 | 80 |
| (020) Grain size, nm | 9.6 | 9.6 | 9.5 | 9.5 |
| (110) Grain size, nm | 10.5 | 10.8 | 10.6 | 10.5 |
| (200) Grain size, nm | 10.0 | 10.2 | 10.2 | 10.1 |
| Breaking strength, CN/dtex | 47.51 | 47.23 | 48.17 | 47.84 |
| Elongation at break,% | 1.98 | 2.05 | 2.07 | 2.03 |
| Modulus, CN/dtex | 1821 | 1849 | 1835 | 1839 |
| Coefficient of Variation(CV) of elongation, % | 2.01 | 2.02 | 2.05 | 1.98 |
| Coefficient of Variation(CV) of strength, % | 1.48 | 1.51 | 1.54 | 1.49 |

Example 5

The mass/volume ratio of a raw material (polyethylene with a number-average molecular weight of 4,870,000) to a solvent (tetrahydronaphthalene) was 6.5%, the auxiliary agent comprised an antioxidant and calcium stearate, the used amounts of the antioxidant and the calcium stearate were respectively 0.7% and 0.3% by mass of the raw material, the swelling temperature was 98°C, the extrusion rate was 3.25m/min, the temperature of the thermal insulation oil jacket was 200°C, the circular blowing gas was nitrogen with a quenching temperature of - 20°C, the time was 0.6s, the gas pressure was 5kPa, the hot roller temperature was 40°C, the temperature of drying and heating box was 80°C (the gas temperature of air knife was 80°C, the gas speed was 40 m/s, and the gas pressure was 0.4 MPa), the temperature of stretching hot box was 125°C, the pre-stretching ratio was 3 times, the temperature of multi-stage stretching hot box was 140-145°C, and the total stretching ratio was 220 times. The solvent was recovered by using the staged recovery mode of different temperature points as mentioned above, a cyclone separator was used in the low-temperature zone, the high-temperature zone adopted an integrated mode of cooling separation - cryogenic separation - cooling separation - adsorption and desorption, the temperature of the cyclone separation and the cooling separation was lower than 40°C, and the temperature of the cryogenic separation was lower than -5°C; the adsorbent was coconut shell activated carbon. The DSC curve and the XRD diagram of the spun fiber were similar to those shown in FIG. 7 and FIG. 8, respectively, the performance measurement indicators were shown in Table 5 below. The solvent recovery rate was 98.0%.

Table 5

|  | Sample 1 | Sample 2 | Sample 3 | Sample 4 |
|---|---|---|---|---|
| Denier, dtex | 51 | 51.4 | 52.7 | 49.8 |
| DSC crystallinity, % | 83 | 83 | 82 | 83 |
| DSC melting point, °C | 148.9 | 148.5 | 149.0 | 148.9 |
| XRD crystallinity, % | 82 | 82 | 83 | 82 |
| (020) Grain size, nm | 9 | 9 | 8.9 | 8.9 |

(continued)

| | Sample 1 | Sample 2 | Sample 3 | Sample 4 |
|---|---|---|---|---|
| (110) Grain size, nm | 10 | 10.2 | 10.5 | 10 |
| (200) Grain size, nm | 10.5 | 10.5 | 10.5 | 10.4 |
| Breaking strength, CN/dtex | 47.9 | 48.3 | 48.6 | 48.1 |
| Elongation at break,% | 1.89 | 1.92 | 1.93 | 1.97 |
| Modulus, CN/dtex | 1842 | 1851 | 1857 | 1848 |
| Coefficient of Variation(CV) of elongation, % | 1.79 | 1.82 | 1.88 | 1.87 |
| Coefficient of Variation(CV) of strength, % | 1.85 | 1.87 | 1.79 | 1.81 |

Example 6

The mass/volume ratio of a raw material (polyethylene with a number-average molecular weight of 4,870,000) to a solvent (methylbenzene) was 6.5%, the auxiliary agent comprised an antioxidant and calcium stearate, the used amounts of the antioxidant and the calcium stearate were respectively 0.7% and 0.3% by mass of the raw material, the swelling temperature was 98°C, the extrusion rate was 3.25m/min, the temperature of the thermal insulation oil jacket was 200°C, the circular blowing gas was air with a quenching temperature of -10°C, the time was 0.6s, the gas pressure was 5kPa, the hot roller temperature was 40°C, the temperature of drying and heating box was 60°C (the gas temperature of air knife was 60°C, the gas speed was 50 m/s, and the gas pressure was 0.4 MPa), the temperature of stretching hot box was 125°C, the pre-stretching ratio was 3 times, the temperature of multi-stage stretching hot box was 140-145°C, and the total stretching ratio was 300 times. The solvent was recovered by using the staged recovery mode of different temperature points as mentioned above, a cyclone separator was used in the low-temperature zone, the high-temperature zone adopted an integrated mode of cooling separation - cryogenic separation - cooling separation - adsorption and desorption, the temperature of the cyclone separation and the cooling separation was lower than 40°C, and the temperature of the cryogenic separation was lower than -5°C; the adsorbent was molecular sieve. The solvent recovery rate was 98.5%. The DSC curve and the XRD diagram of the spun fiber were similar with those shown in FIG. 7 and FIG. 8, respectively, the performance measurement indicators were shown in Table 6 below.

Table 6

| | Sample 1 | Sample 2 | Sample 3 | Sample 4 |
|---|---|---|---|---|
| Denier, dtex | 52.2 | 52.7 | 52.1 | 52.3 |
| DSC crystallinity, % | 80.5 | 81 | 81 | 80.8 |
| DSC melting point, °C | 148.2 | 148.4 | 148.5 | 148.2 |
| XRD crystallinity, % | 80 | 81 | 81 | 80 |
| (020) Grain size, nm | 9.5 | 9.6 | 9.5 | 9.5 |
| (110) Grain size, nm | 10.2 | 10.6 | 10.4 | 10.5 |
| (200) Grain size, nm | 10.3 | 10.1 | 10.2 | 10.1 |
| Breaking strength, CN/dtex | 47.5 | 47.3 | 47.6 | 48.1 |
| Elongation at break,% | 2.12 | 2.08 | 2.17 | 2.09 |
| Modulus, CN/dtex | 1824 | 1827 | 1839 | 1837 |
| Coefficient of Variation(CV) of elongation, % | 1.85 | 1.87 | 1.97 | 1.92 |
| Coefficient of Variation(CV) of strength, % | 2.1 | 2.08 | 2.04 | 2.16 |

Example 7

The spinning was carried out according to the same method as that in Example 4, except that a conventional drying and heating box was used, that is, an air knife structure was not disposed in the drying and heating box; the DSC curve and the XRD diagram of the spun fiber were similar with those of FIG. 7 and FIG. 8, respectively, the performance measurement indicators were shown in Table 7 below. The solvent recovery rate was 84%.

Table 7

| | Sample 1 | Sample 2 | Sample 3 | Sample 4 |
|---|---|---|---|---|
| Denier, dtex | 78.6 | 81.3 | 84.7 | 86.8 |
| DSC crystallinity, % | 60 | 61 | 62 | 61 |
| DSC melting point, °C | 148 | 148 | 147.9 | 148.2 |
| XRD crystallinity, % | 62 | 62 | 63 | 62 |
| (020) Grain size, nm | 9.6 | 9.5 | 9.5 | 9.6 |
| (110) Grain size, nm | 11.5 | 11.4 | 11.3 | 11.5 |
| (200) Grain size, nm | 11 | 10.8 | 10.8 | 10.5 |
| Breaking strength, CN/dtex | 40.2 | 39.4 | 38.9 | 38.7 |
| Elongation at break,% | 3.25 | 3.18 | 3.67 | 3.54 |
| Modulus, CN/dtex | 1420 | 1524 | 1486 | 1479 |
| Coefficient of Variation(CV) of elongation, % | 3.62 | 4.87 | 3.97 | 5.92 |
| Coefficient of Variation(CV) of strength, % | 5.64 | 7.08 | 5.04 | 6.16 |

Example 8

The spinning was carried out according to the same method as that in Example 4, except that the structure of the air knife in the drying and heating box was a straight type; the DSC curve and the XRD diagram of the spun fiber of different batches were similar with those of FIG. 7 and FIG. 8, respectively, the performance measurement indicators were shown in Table 8 below. The solvent recovery rate was 95%.

Table 8

| | Sample 1 | Sample 2 | Sample 3 | Sample 4 |
|---|---|---|---|---|
| Denier, dtex | 54.3 | 55.5 | 55.9 | 56.2 |
| DSC crystallinity, % | 70 | 70.2 | 70.5 | 70 |
| DSC melting point, °C | 148.5 | 148.5 | 148.2 | 148.4 |
| XRD crystallinity, % | 71 | 72 | 71 | 72 |
| (020) Grain size, nm | 9.3 | 9.4 | 9.3 | 9.4 |
| (110) Grain size, nm | 11.2 | 11.2 | 10.8 | 10.9 |
| (200) Grain size, nm | 10.8 | 10.8 | 10.9 | 10.8 |
| Breaking strength, CN/dtex | 43.6 | 44.3 | 45.2 | 44.7 |
| Elongation at break,% | 1.98 | 2.09 | 2.15 | 2.19 |
| Modulus, CN/dtex | 1657 | 1637 | 1648 | 1653 |
| Coefficient of Variation(CV) of elongation, % | 2.38 | 2.87 | 3.07 | 2.92 |
| Coefficient of Variation(CV) of strength, % | 2.16 | 2.78 | 2.94 | 3.16 |

Comparative Example 1

The fiber filaments were prepared according to the same method as that in Example 4, except that the circular blowing mode was changed to the lateral blow process described in CN106544741B, the temperature of the side blowing air was 10°C, and a air knife structure was not disposed in the drying and heating box ; the DSC curve and the XRD diagram of the spun fiber were as shown in the Sample 1 of FIG. 7 and FIG. 8, respectively, the performance measurement indicators of the fibers of different batches were shown in Table 9 below.

Table 9

| | Sample 1 | Sample 2 | Sample 3 |
|---|---|---|---|
| Denier, dtex | 58 | 53 | 55 |
| DSC crystallinity, % | 48 | 49 | 48 |
| DSC melting point, °C | 146.5 | 147 | 147.2 |
| XRD crystallinity, % | 50 | 51 | 50 |
| (020) Grain size, nm | 12 | 13 | 13 |
| (110) Grain size, nm | 13.5 | 13.8 | 14 |
| (200) Grain size, nm | 13 | 12.9 | 13 |
| Breaking strength, CN/dtex | 35.1 | 34.9 | 36.2 |
| Elongation at break,% | 1.82 | 1.91 | 1.94 |
| Modulus, CN/dtex | 1271 | 1276 | 1269 |
| Coefficient of Variation(CV) of elongation, % | 3.97 | 4.28 | 3.57 |
| Coefficient of Variation(CV) of strength, % | 5.1 | 5.4 | 4.7 |

Comparative Example 2

The fiber filaments were prepared according to the same method as that in Example 4, except that the circular blowing gas was air with a quenching temperature of 10°C, the performance measurement indicators of the prepared fibers were shown in Table 10 below.

Table 10

| | Sample 1 | Sample 2 | Sample 3 | Sample 4 |
|---|---|---|---|---|
| Denier, dtex | 53.6 | 54.7 | 54.3 | 54.1 |
| DSC crystallinity, % | 47.5 | 47.9 | 47.8 | 47.9 |
| DSC melting point, °C | 145.5 | 145.7 | 146.2 | 146 |
| XRD crystallinity, % | 50 | 51 | 50 | 52 |
| (020) Grain size, nm | 12 | 13 | 13 | 11 |
| (110) Grain size, nm | 13.5 | 13.8 | 14 | 13 |
| (200) Grain size, nm | 13 | 12.9 | 13 | 12.5 |
| Breaking strength, CN/dtex | 34.8 | 35.1 | 36.8 | 33.7 |
| Elongation at break,% | 1.97 | 2.05 | 2.18 | 2.09 |
| Modulus, CN/dtex | 1257 | 1251 | 1266 | 1297 |
| Coefficient of Variation(CV) of elongation, % | 3.47 | 3.28 | 3.21 | 3.17 |
| Coefficient of Variation(CV) of strength, % | 4.8 | 3.6 | 3.9 | 4.9 |

Irregularity detection

The spinning was performed according to the methods in Comparative Example 1 and Example 1, except that the jet stretching ratio and the pre-stretching ratio were adjusted according to the mode shown in the following tables, The following Table 11 showed the Denier and irregularity of nascent gel filaments obtained following the cooling formation, and the following Table 12 illustrated the Denier and irregularity of semi-finished filaments obtained after drying and removing the solvent, respectively.

Table 11 Denier and irregularity of nascent gel filaments

| Jet stretching ratio | Denier | Irregularity | Remarks |
|---|---|---|---|
| 8 | 648 | 4.24% | Existing lateral blow spinning process (Comparative Example 1) |
| 20 | 526 | 1.94% | Method in Example 1 of the present invention |
| 30 | 468 | 1.81% | |
| 40 | 387 | 1.73% | |
| 50 | 324 | 1.64% | |
| 60 | 275 | 1.69% | |

Table 12 Denier and irregularity of semi-finished filaments

| Jet stretching ratio | Pre-stretching ratio | Denier | Irregularity | Remarks |
|---|---|---|---|---|
| 8 | 3 | 578 | 3.36% | Existing lateral blow spinning process (Comparative Example 1) |
| 20 | 3 | 419 | 0.94% | Method in Example 1 of the present invention |
| 30 | 3 | 372 | 0.81% | |
| 40 | 3 | 276 | 0.73% | |
| 50 | 3 | 221 | 0.64% | |
| 60 | 3 | 173 | 0.69% | |

As can be seen by comparing Table 11 with Table 12, because the solvent is not removed from the nascent gel filaments, the nascent gel filaments exhibit a large fluctuation range during the Denier measurement process; given that the solvent is removed from the semi-finished filaments, the measurements of Denier are relatively uniform and have small fluctuation amplitude. The method of the present invention can be used for greatly lowering irregularity of both the nascent gel filaments and the semi-finished filaments.

The irregularity of the fiber filament product obtained by stretching the semi-finished filament is within a range of 0.9-1%, while the irregularity of the fiber filament product obtained by the lateral blowing process of the Comparative Example 1 is higher than 3%.

It is evidently demonstrated from the data in the Tables that the fibers produced with the method provided by the present invention have a higher breaking strength and modulus and lower irregularity.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A spun fiber, said spun fiber being a crystalline polymer, it is **characterized in that** the spun fiber has an irregularity no more than 1.5%, and a crystallinity measured by Differential Scanning Calorimetry within a range of 60-95%, preferably 85-90%; the spun fiber has a grain size measured by X-ray Diffraction (XRD) along the normal direction of the (020) crystal plane within a range of 7.4-9.6nm, preferably 7.8-9nm; a grain size along the normal direction of the (110) crystal plane within a range of 8.8-11.5nm, preferably 8.9-10nm; and a grain size along the normal direction of the (200) crystal plane within a range of 7.3-11nm, preferably 7.8-10.5nm.

2. The spun fiber according to claim 1, wherein the spun fiber has an irregularity within a range of 0.9-1%, and a crystallinity measured by X-Ray Diffraction (XRD) within a range of 60-95%, preferably 80-90%.

3. The spun fiber according to claim 1 or 2, wherein the spun fiber has a melting point measured by Differential Scanning Calorimetry within a range of 148-151°C, preferably 149-151°C.

4. The spun fiber according to claim 1 or 2 or 3, wherein the spun fiber is polyethylene spun fiber having a denier within a range of 6-100dtex, a breaking strength within a range of 40-55 CN/dtex and a modulus more than 1,800 CN/dtex, preferably within a range of 1,850-2,000 CN/dtex.

5. A fiber spinning method, comprises extruding and spinning a spinning solution, and sequentially subjecting fiber precursors obtained by spinning to cooling formation, drying and stretching, it is **characterized in that** the cooling formation are carried out so that the irregularity of nascent gel filaments obtained after the cooling formation is not more than 3%, preferably within a range of 1.5-2%.

6. The method according to claim 5, wherein the cooling formation are performed such that semi-finished fiber filaments obtained after drying has an irregularity not more than 1.5%, preferably within a range of 0.5-0.95%.

7. The method of claim 5 or 6, wherein the method of cooling formation comprises blowing the fiber precursors with a fluid at a temperature not more than -10°C.

8. The method according to claim 7, wherein the temperature of the fluid for cooling formation is within a range of -50°C to -10°C, preferably from -40°C to -10°C, more preferably from -30°C to -20°C.

9. The method according to claim 7 or 8, wherein the fluid is a gas, preferably the blowing is performed by a circular blow centered on the fiber precursors.

10. The method according to any one of claims 7-9, wherein the blowing time is 0.5-0.7 seconds, and the pressure is within a range of 0-100kPa, preferably 3-10kPa.

11. The method according to any one of claims 7-10, wherein the fluid used for cooling formation is one or more selected from a group consisting of liquid nitrogen, air and an inert gas.

12. The method according to any one of claims 7-11, wherein the drying mode comprises contacting the cooling formed fiber precursors with a drying gas having a speed not lower than 20 m/s, preferably 30-40 m/s; and a temperature of the drying gas is preferably within a range of 0-140°C, more preferably 40-80°C.

13. The method according to any one of claims 7-12, wherein the drying is performed in a drying and heating box (6), the drying and heating box (6) comprises a box body and an air knife (60), the box body is provided with a drying chamber for drying the material, the air knife (60) is disposed in the drying chamber, the air knife (60) comprises an inner barrel (61) and an outer barrel (62) which are coaxially sleeved, one end of the inner barrel (61) has an opening shape to form an air inlet (611) of the air knife (60), a first air outlet (612) in communication with the air inlet (611) is opened on a barrel wall of the inner barrel (61), a second air outlet (621) is opened on a barrel wall of the outer barrel (62), a radial space is provided between the inner barrel (61) and the outer barrel (62) to form a communication channel (63) for communicating the first air outlet (612) with the second air outlet (621), at least one of the inner barrel (61) and the outer barrel (62) is set to be capable of moving along a radial direction of the air knife (60) so as to adjust an air output quantity and an air outlet direction of the second air outlet (621), the second air outlet (621) of the air knife (60) is arranged to align with the materials; the box body is opened with a feed inlet, a discharge outlet, a drying gas inlet and a drying gas outlet which are in communication with the drying chamber, the air inlet (611) is in communication with the drying gas inlet, and the second air outlet (621) is in communication with the drying gas outlet.

14. The method according to claim 13, wherein the first air outlet (612) has a long strip shape and extends along an axial direction of the inner barrel (61), the second air outlet (621) has a long strip shape and extends along an axial direction of the outer barrel (62), the first air outlet (612) and the second air outlet (621) are misaligned from each other in a circumferential direction of the air knife (60); and/or one end of the inner barrel (61) departing from the air inlet (611) is closed, and two ends of the communication channel (63) are closed;

the first air outlet (612) and the second air outlet (621) are arranged opposite in the circumferential direction of the air knife (60), and/or

an opening angle of the first air outlet (612) and the second air outlet (621) in the circumferential direction of the air knife (60) is within a range of 0-90°, preferably 25-40°.

15. The method according to claim 13 or 14, wherein the air knife (60) comprises an installation component for mounting the inner barrel (61) and

the outer barrel (62), and/or
the inner barrel (61) is arranged to be movable relative to the outer barrel (62) along the radial direction of the air knife (60).

16. The method according to claim 15, wherein the installation component comprises two movable flanges (64) respectively mounted at both ends of the inner barrel (61), and two fixed flanges (65) respectively mounted at both ends of the outer barrel (62), the two movable flanges (64) are respectively connected with the two fixed flanges (65), and are arranged to be lockably movable relative to the corresponding fixed flanges (65) along a radial direction of the air knife (60).

17. The method according to claim 16, wherein the movable flanges (64) and the fixed flanges (65) are connected with each other through fasteners, each of the movable flanges (64) and the fixed flanges (65) is provided with through holes for allowing the fasteners to pass through, the through holes in the movable flange (64) are circular holes (641), and the through holes in the fixed flange (65) are oblong holes (651); and/or
one end of the inner barrel (61) provided with the air inlet (611) extends beyond the movable flanges (64).

18. The method according to any one of claims 14-17, wherein the feed inlet and the discharge outlet are respectively located at two opposite sides of the box body, a plurality of air knives (60) are arranged in the drying chamber, and the plurality of air knives (60) extend along a direction perpendicular to the feeding and discharging direction of the materials and are arranged at intervals along the feeding and discharging direction of the materials.

19. The method according to any of claims 7-18, wherein a total stretching ratio of the stretching is within a range of 100-1,000, preferably 200-940.

20. The method according to any one of claims 7-19, wherein the method further comprises recovering the solvent in the cooling formation process and the drying process, wherein the solvent in the cooling formation process is recovered by means of a cyclone separation, and the solvent in the drying process is recovered by means of a combination of cryogenic separation and adsorption-desorption.

21. The method according to claim 20, wherein the temperature of the cyclone separation is lower than 40°C, preferably 10-30°C.

22. The method according to claim 20 or 21, wherein the combination mode of cryogenic separation and adsorption-desorption is that initially performing the cryogenic separation and subsequently performing the adsorption-desorption.

23. The method according to any of claims 20-22, wherein the temperature of the cryogenic separation is lower than -5°C, preferably -20°C to -10°C.

24. The method according to any one of claims 20-23, wherein the adsorption is performed by subjecting the gas from the drying process to contact with an adsorbent.

25. The method according to claim 24, wherein the adsorbent is one or more selected from a group consisting of activated carbon, coconut shell activated carbon and carbon molecular sieve, preferably cylindrical activated carbon with a diameter of 3-6mm.

26. The method according to any one of claims 20-25, wherein the desorption conditions comprise a desorption temperature of 5-25°C and a pressure of 0.1-5MPa.

FIG. 1

FIG. 2

FIG. 3

FIG. 4

FIG. 5

FIG. 6

FIG. 7

FIG. 8

## INTERNATIONAL SEARCH REPORT

International application No.

**PCT/CN2021/125724**

### A. CLASSIFICATION OF SUBJECT MATTER

D01D 5/092(2006.01)i; D01D 10/06(2006.01)i; D01F 6/04(2006.01)i

According to International Patent Classification (IPC) or to both national classification and IPC

### B. FIELDS SEARCHED

Minimum documentation searched (classification system followed by classification symbols)

D01D; D01F

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 中国石油化工股份有限公司, 孔凡敏, 超高分子量, 聚乙烯, 纤维, 冷却, 低温, 骤冷, 急冷, 零下, 凝胶丝, 冻胶丝, 不匀率, 结晶度, 晶粒, UHMWPE, ultra-high molecular weight polyethylene, cool+, quench+, gel fiber+, homogeniz+, spinneret+, spin+

### C. DOCUMENTS CONSIDERED TO BE RELEVANT

| Category* | Citation of document, with indication, where appropriate, of the relevant passages | Relevant to claim No. |
|---|---|---|
| A | CN 106637435 A (CHINA TEXTILE ACADEMY) 10 May 2017 (2017-05-10) description, paragraphs [0004]-[0076], and figures 1-3 | 1-26 |
| A | CN 102154749 A (DONGHUA UNIVERSITY) 17 August 2011 (2011-08-17) entire document | 1-26 |
| A | CN 101787576 A (CHANGSHU SUPER FIBERS CO., LTD.) 28 July 2010 (2010-07-28) entire document | 1-26 |
| A | CN 1888153 A (DONGHUA UNIVERSITY) 03 January 2007 (2007-01-03) entire document | 1-26 |
| A | CN 101886298 A (DONGHUA UNIVERSITY) 17 November 2010 (2010-11-17) entire document | 1-26 |
| A | JP H073524 A (INDUSTRIAL TECHNOLOGY RESEARCH INSTITUTE) 06 January 1995 (1995-01-06) entire document | 1-26 |

☐ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 January 2022** | **17 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/125724** |

| Box No. III     Observations where unity of invention is lacking (Continuation of item 3 of first sheet) |
| --- |

This International Searching Authority found multiple inventions in this international application, as follows:

[1]  Independent claim 1 and dependent claims 2-4 thereof relate to a spinning fiber;

[2]  Independent claim 5 and dependent claims 6-26 thereof relate to a method for fiber spinning.

[3]  The same or corresponding technical feature of independent claim 1 and independent claim 5 is "a spinning fiber", however, said same or corresponding technical feature is known in the present field, therefore, independent claim 1 and independent claim 5 do not share a same or corresponding special technical feature that defines a contribution which the invention makes over the prior art, do not have a technical relationship, do not belong to a single general inventive concept, and thus lack unity, and do not comply with PCT Rule 13.1.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**   ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

INTERNATIONAL SEARCH REPORT
Information on patent family members

International application No.

**PCT/CN2021/125724**

| Patent document cited in search report | | | Publication date (day/month/year) | Patent family member(s) | | | Publication date (day/month/year) |
|---|---|---|---|---|---|---|---|
| CN | 106637435 | A | 10 May 2017 | None | | | |
| CN | 102154749 | A | 17 August 2011 | CN | 102154749 | B | 02 January 2013 |
| CN | 101787576 | A | 28 July 2010 | CN | 101787576 | B | 17 August 2011 |
| CN | 1888153 | A | 03 January 2007 | CN | 100441753 | C | 10 December 2008 |
| CN | 101886298 | A | 17 November 2010 | CN | 101886298 | B | 08 May 2013 |
| JP | H073524 | A | 06 January 1995 | JP | 2612667 | B2 | 21 May 1997 |
| | | | | US | 5342567 | A | 30 August 1994 |
| | | | | NL | 9301978 | A | 01 February 1995 |
| | | | | KR | 266997 | B1 | 15 September 2000 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011148949
- CN 101148783 B
- CN 110791821 A
- CN 106544741 B